# EUROPEAN PATENT APPLICATION

(11) **EP 4 617 873 A1**
(43) Date of publication of application: **17.09.2025**
(21) Application number: 23893172.9
(22) Date of filing: 30.06.2023
(51) Int. Cl.: G06F 9/50

(54) **HOST MANAGEMENT METHOD AND APPARATUS**

(30) Priority: 21.11.2022 CN 202211462339
(71) Applicant: Huawei Cloud Computing Technologies Co., Ltd., Guiyang, Guizhou 550025 (CN)
(72) Inventor: ZHU, Lei, Guiyang, Guizhou 550025 (CN); DU, Tianlin, Guiyang, Guizhou 550025 (CN); ZHOU, Wenli, Guiyang, Guizhou 550025 (CN); SU, Li, Guiyang, Guizhou 550025 (CN); ZHOU, Mosong, Guiyang, Guizhou 550025 (CN)
(74) Representative: Körber, Martin Hans
(86) International application number: PCT/CN2023/104649
(87) International publication number: WO 2024/109072

(57) **Abstract**

This application belongs to the field of cloud computing technologies, and discloses a host management method and apparatus. The method includes: receiving a resource defragmentation instruction sent by a user, where the resource defragmentation instruction instructs to perform a resource defragmentation operation on a host cluster purchased by the user, and the host cluster includes a plurality of hosts; and performing the resource defragmentation operation on the host cluster based on the resource defragmentation instruction. This application improves resource utilization of the host cluster.

## Description

This application claims priority to Chinese Patent Application No. 202211462339.4, filed on November 21, 2022 and entitled "HOST MANAGEMENT METHOD AND APPARATUS", which is incorporated herein by reference in its entirety.

### TECHNICAL FIELD

This application relates to the field of cloud computing technologies, and in particular, to a host management method and apparatus.

### BACKGROUND

A dedicated host (dedicated host, DEH) service is characterized by high resource isolation, flexible deployment, and allowance for a user-provided operating system license (license). Therefore, more and more users try to use the dedicated host service as a first choice when using a cloud service. In the dedicated host service, customers have absolute management and control rights over dedicated host clusters of the customers. The customers can freely manage resource distribution in the dedicated host clusters and even specify a host on which a virtual instance is to be deployed.

Currently, when cloud service vendors sell the dedicated host service, the user needs to specify a quantity of hosts to be purchased when purchasing the dedicated host service. In addition, the user creates a virtual instance needed by the user on the specified host when using the dedicated host service.

However, currently, resource utilization of the dedicated host service needs to be improved.

### SUMMARY

This application provides a host management method and apparatus. This application improves resource utilization of a dedicated host service. Technical solutions provided in this application are as follows.

According to a first aspect, this application provides a host management method. The method includes: receiving a resource defragmentation instruction sent by a user, where the resource defragmentation instruction instructs to perform a resource defragmentation operation on a host cluster purchased by the user, and the host cluster includes a plurality of hosts; and performing the resource defragmentation operation on the host cluster based on the resource defragmentation instruction.

In the host management method provided in this application, a host management device may receive the resource defragmentation instruction sent by the user, and perform the resource defragmentation operation on the host cluster based on the resource defragmentation instruction. The resource defragmentation instruction instructs to perform the resource defragmentation operation on the host cluster purchased by the user, and the host cluster includes a plurality of hosts. In this way, in the host management method, the resource defragmentation operation is performed on the host cluster, so that a resource usage status of the host cluster can be improved, and resource utilization of the host cluster is improved.

In a first implementation in which the user triggers the resource defragmentation instruction, when determining that the resource defragmentation operation needs to be performed on the host cluster, the host management device may send a resource defragmentation request to the user, and when determining that the resource defragmentation operation needs to be performed on the host cluster, the user may trigger the resource defragmentation instruction based on the resource defragmentation request. In an implementation, an implementation process of the host management method provided in this application further includes: monitoring the resource usage status of the host cluster; and when the resource usage status meets a specified condition, sending, to the user, the resource defragmentation request for requesting to perform the resource defragmentation operation on the host cluster. Correspondingly, the receiving a resource defragmentation instruction sent by a user includes: receiving the resource defragmentation instruction triggered by the user based on the resource defragmentation request.

In different application scenarios, there may be a plurality of implementations of the specified condition. In some possible implementations, the specified condition may include one or more of the following: The resource usage status indicates that the resource utilization of the host cluster is less than a utilization threshold; a quantity of provisionable virtual instances in the host cluster can be increased through resource defragmentation; and an idle host can be obtained through resource defragmentation, and costs saved by unsubscribing from the idle host meet a specified requirement, where the idle host is a host on which no virtual instance is deployed.

When the specified condition includes that the resource usage status indicates that the resource utilization of the host cluster is less than the utilization threshold, if the specified condition is met, the resource defragmentation request is sent to the user, so that when the resource utilization of the host cluster is low, the user can be queried whether to perform the resource defragmentation operation on the host cluster. This helps improve the resource utilization of the host cluster and reduce costs of using the host cluster by the user.

When the specified condition includes that the quantity of provisionable virtual instances in the host cluster is expected to be increased through resource defragmentation, if the specified condition is met, the resource defragmentation request is sent to the user, so that the quantity of provisionable virtual instances in the host cluster can be increased. This helps provision more virtual instances under same usage costs of the host cluster, and improves quality of service and the resource utilization of the host cluster.

When the specified condition includes that the idle host is expected to be obtained through resource defragmentation, and the costs saved by unsubscribing from the idle host meet the specified requirement, if the specified condition is met, the resource defragmentation request is sent to the user, so that a host can be vacated in the host cluster, and costs may be reduced by unsubscribing from the idle host. This helps reduce the costs of using the host cluster by the user. That the costs saved by unsubscribing from the idle host meet the specified requirement may mean that the costs saved by unsubscribing from the idle host can compensate for impact of migrating a virtual instance originally deployed on the idle host to a public resource pool. Resources in the public resource pool can be used by a plurality of users, while resources in the host cluster are used only by a user who purchases the host cluster. In comparison with the public resource pool, the host cluster has advantages such as better isolation. Migrating the virtual instance originally deployed on the host to the public resource pool may cause quality of service deterioration. Therefore, the specified requirement met by the costs saved by unsubscribing from the idle host can be that the saved costs can compensate for the quality of service deterioration caused by migrating the virtual instance to the public resource pool.

Optionally, the resource defragmentation request may further carry a defragmentation benefit obtained by performing the resource defragmentation operation. In this way, when viewing the resource defragmentation request, the user may view the defragmentation benefit that can be obtained by performing the resource defragmentation operation, so that the user determines, with reference to the defragmentation benefit, whether the resource defragmentation operation needs to be performed on the host cluster. The defragmentation benefit may be obtained by performing resource defragmentation derivation on the host cluster by the host management device.

In an implementation, the defragmentation benefit includes one or more of the following: an improvement degree of the resource utilization, a quantity of idle hosts that can be obtained through defragmentation, costs that can be saved by unsubscribing from the idle host obtained through defragmentation, and a quantity of provisionable virtual instances that can be increased by and costs saved due to the increase in a quantity of provisionable virtual instances, where the idle host is a host on which no virtual instance is deployed. The costs saved due to the increase in the quantity of provisionable virtual instances are costs that need to be consumed for deployment of virtual instances of a same quantity when the resource defragmentation operation is not performed on the host cluster. For example, because an additional host needs to be purchased to deploy the virtual instances of the same quantity, the costs may be costs needed for purchasing the additional host.

In a second implementation in which the user triggers the resource defragmentation instruction, the host management device may reflect the resource usage status of the host cluster to the user, and when determining, based on the resource usage status, that the resource defragmentation operation needs to be performed, the user triggers the resource defragmentation instruction. In an implementation, an implementation process of the host management method provided in this embodiment of this application further includes: monitoring the resource usage status of the host cluster, and reflecting the resource usage status of the host cluster to the user. Correspondingly, the receiving a resource defragmentation instruction sent by a user includes: receiving the resource defragmentation instruction triggered by the user based on the resource usage status.

In a third implementation in which the user triggers the resource defragmentation instruction, the resource defragmentation instruction may be triggered by a selection operation of the resource defragmentation operation when the user purchases the host cluster. In an implementation, a host purchasing platform provides an option of choosing, when the host cluster is purchased, whether to perform resource defragmentation on the host cluster. When purchasing the host cluster, the user may choose to perform the resource defragmentation operation on the host cluster, or may not choose to perform the resource defragmentation operation on the host cluster. If the user chooses to perform the resource defragmentation operation on the host cluster, the host management device may perform the resource defragmentation operation on the host cluster when the host cluster meets a defragmentation condition. The host management device and the user may pre-agree on the defragmentation condition, or the host management device may provide a standby option of the defragmentation condition, and a standby option selected by the user is the defragmentation condition.

The user may specify an optimization target when the resource defragmentation operation is performed on the host cluster. When performing the resource defragmentation operation on the host cluster, the host management device may defragment the resource in the host cluster by using the optimization target as a goal, to implement defragmentation of the resource in the host cluster as required. The method further includes: receiving a resource defragmentation target sent by the user, where the resource defragmentation target indicates a principle that needs to be followed for performing the resource defragmentation operation. Correspondingly, the performing the resource defragmentation operation on the host cluster includes: performing the resource defragmentation operation on the host cluster based on the resource defragmentation target.

In different implementation scenarios, the resource defragmentation target may be different. In an implementation, the resource defragmentation target includes one or two of the following: maximizing a quantity of idle hosts in the host cluster, and maximizing the quantity of provisionable virtual instances in the host cluster, where the idle host is a host on which no virtual instance is deployed.

When the resource defragmentation target includes maximizing the quantity of idle hosts in the host cluster, as many hosts as possible can be vacated through resource defragmentation, so that the user can unsubscribe from the idle host as required, to reduce usage costs of the host and avoid a waste of resources. When the resource defragmentation target includes maximizing the quantity of provisionable virtual instances in the host cluster, a manner of deploying the virtual instance in the host cluster can be optimized through resource defragmentation, so that an optimized host cluster can provision as many virtual instances as possible, to improve a virtual instance provisioning capability of the host cluster. In this way, the usage costs of the host can be reduced, and in addition, quality of service can be improved.

In an implementation, the resource defragmentation operation includes one or two of the following: adjusting a deployment status of the virtual instance in the host cluster, and migrating a part of virtual instances deployed in the host cluster to the public resource pool.

In this case, the host management device performs resource defragmentation on the host cluster, so that the user does not need to manually migrate the virtual instance deployed on the host, and the user does not need to identify a host that needs to be unsubscribed from. This implements automatic management on the host cluster of the user.

After resource defragmentation, an idle host may exist in the host cluster. The host management device may reflect, to the user, that an idle host exists in the host cluster, so that the user determines whether the idle host needs to be unsubscribed from. The method further includes: reflecting to the user that an idle host exists in the host cluster, where the idle host is a host on which no virtual instance is deployed; receiving an unsubscription instruction sent by the user, where the unsubscription instruction instructs to unsubscribe from a target idle host in the host cluster; and performing an unsubscription operation on the target idle host based on the unsubscription instruction.

In an implementation, the unsubscription instruction may carry a quantity of idle hosts that need to be unsubscribed from, to instruct the host management device to perform the unsubscription operation on the idle hosts of the quantity. Alternatively, the unsubscription instruction may carry information such as identification information of an idle host that needs to be unsubscribed from, to instruct the host management device to perform the unsubscription operation on the idle host indicated by the information. In addition, target idle hosts may be a part of or all idle hosts in the host cluster.

In a possible implementation, the method further includes: storing configuration information of the target idle host based on the unsubscription instruction.

In this way, after the performing an unsubscription operation on the target idle host based on the unsubscription instruction, the method may further include: after a host purchase instruction of the user is received, allocating a host to the user, and configuring the allocated host by using the configuration information.

In this case, when the user unsubscribes from the target idle host, the configuration information of the target idle host is stored, so that when the user purchases a host again, the host configured for the user can be configured by using the stored configuration information, and the user does not need to indicate a configuration manner of the host again. This can effectively improve host management efficiency of the host management device, and improve user experience.

According to a second aspect, this application provides a host management apparatus. The apparatus includes: an interaction module, configured to receive a resource defragmentation instruction sent by a user, where the resource defragmentation instruction instructs to perform a resource defragmentation operation on a host cluster purchased by the user, and the host cluster includes a plurality of hosts; and a processing module, configured to perform the resource defragmentation operation on the host cluster based on the resource defragmentation instruction.

Optionally, the apparatus further includes: a monitoring module, configured to monitor a resource usage status of the host cluster. The interaction module is further configured to: when the resource usage status meets a specified condition, send, to the user, a resource defragmentation request for requesting to perform the resource defragmentation operation on the host cluster. The interaction module is specifically configured to receive the resource defragmentation instruction triggered by the user based on the resource defragmentation request.

Optionally, the specified condition includes one or more of the following: The resource usage status indicates that resource utilization of the host cluster is less than a utilization threshold; a quantity of provisionable virtual instances in the host cluster can be increased through resource defragmentation; and an idle host can be obtained through resource defragmentation, and costs saved by unsubscribing from the idle host meet a specified requirement, where the idle host is a host on which no virtual instance is deployed.

Optionally, the resource defragmentation request further carries a defragmentation benefit obtained by performing the resource defragmentation operation.

Optionally, the defragmentation benefit includes one or more of the following: an improvement degree of the resource utilization, a quantity of idle hosts that can be obtained through defragmentation, costs that can be saved by unsubscribing from the idle host obtained through defragmentation, and a quantity of provisionable virtual instances that can be increased by and costs saved due to the increase in a quantity of provisionable virtual instances, where the idle host is a host on which no virtual instance is deployed.

Optionally, the interaction module is further configured to reflect a resource usage status of the host cluster to the user. The interaction module is specifically configured to receive the resource defragmentation instruction triggered by the user based on the resource usage status.

Optionally, the resource defragmentation instruction is triggered by a selection operation of the resource defragmentation operation when the user purchases the host cluster.

Optionally, the interaction module is further configured to receive a resource defragmentation target sent by the user, where the resource defragmentation target indicates a principle that needs to be followed for performing the resource defragmentation operation. The processing module is specifically configured to perform the resource defragmentation operation on the host cluster based on the resource defragmentation target.

Optionally, the resource defragmentation target includes one or two of the following: maximizing a quantity of idle hosts in the host cluster, and maximizing the quantity of provisionable virtual instances in the host cluster, where the idle host is a host on which no virtual instance is deployed.

Optionally, the resource defragmentation operation includes one or two of the following: adjusting a deployment status of the virtual instance in the host cluster, and migrating a part of virtual instances deployed in the host cluster to a public resource pool.

Optionally, the interaction module is further configured to reflect to the user that an idle host exists in the host cluster, where the idle host is a host on which no virtual instance is deployed. The interaction module is further configured to receive an unsubscription instruction sent by the user, where the unsubscription instruction instructs to unsubscribe from a target idle host in the host cluster. The processing module is further configured to perform an unsubscription operation on the target idle host based on the unsubscription instruction.

Optionally, the processing module is further configured to store configuration information of the target idle host based on the unsubscription instruction.

Optionally, the processing module is further configured to: after a host purchase instruction of the user is received, allocate a host to the user, and configure the allocated host by using the configuration information.

According to a third aspect, this application provides a computer device, including a memory and a processor. The memory stores program instructions, and the processor runs the program instructions to perform the method provided in any one of the first aspect and the possible implementations of the first aspect of this application.

According to a fourth aspect, this application provides a computer cluster, including a plurality of computer devices. The plurality of computer devices include a plurality of processors and a plurality of memories, the plurality of memories store program instructions, and the plurality of processors run the program instructions, to enable the computer cluster to perform the method provided in any one of the first aspect and the possible implementations of the first aspect of this application.

According to a fifth aspect, this application provides a computer-readable storage medium. The computer-readable storage medium is a non-volatile computer-readable storage medium, the computer-readable storage medium includes program instructions, and when the program instructions are run on a computer device, the computer device is enabled to perform the method provided in any one of the first aspect and the possible implementations of the first aspect of this application.

According to a sixth aspect, this application provides a computer program product including instructions. When the computer program product runs on a computer, the computer is enabled to perform the method provided in any one of the first aspect and the possible implementations of the first aspect of this application.

### BRIEF DESCRIPTION OF DRAWINGS

FIG. 1 is a diagram of a structure of an implementation environment related to a host management method according to an embodiment of this application;
FIG. 2 is a flowchart of a host management method according to an embodiment of this application;
FIG. 3 is a diagram of a host cluster management interface displayed on a client according to an embodiment of this application;
FIG. 4 is a diagram of presenting a resource management request on a management interface according to an embodiment of this application;
FIG. 5 is another diagram of presenting a resource management request on a management interface according to an embodiment of this application;
FIG. 6 is a diagram of a host cluster purchase interface displayed on a client according to an embodiment of this application;
FIG. 7 is a diagram of a structure of a host management apparatus according to an embodiment of this application;
FIG. 8 is a diagram of a structure of another host management apparatus according to an embodiment of this application;
FIG. 9 is a diagram of a structure of a computer device according to an embodiment of this application; and
FIG. 10 is a diagram of a structure of a computing device cluster according to an embodiment of this application.

### DESCRIPTION OF EMBODIMENTS

To make objectives, technical solutions, and advantages of this application clearer, the following further describes implementations of this application in detail with reference to the accompanying drawings.

For ease of understanding, the following first describes associated technologies and backgrounds in embodiments of this application.

Virtualization (virtualization) is a resource defragmentation technology that abstracts and converts various physical resources of a host, such as computing resources, network resources, and storage resources, for presentation, breaks indivisible barriers between physical structures of hosts, and enables users to use these resources in a manner better than an original configuration. Resources used through virtualization are referred to as virtual resources. The virtual resources are not limited by an architecture, a setting location, or a physical configuration of an existing physical resource.

A host (physical machine, PM) is a physical resource for carrying a virtualization technology. The host is also referred to as a physical machine. Generally, a host for deploying a virtual instance is usually a physical server. The physical machine has a plurality of physical devices. For example, the physical server has physical devices such as a processor and a memory.

A plurality of virtual instances may be deployed on one host, and the plurality of virtual instances deployed on the same host share physical resources of the host. Based on different usage statuses, a virtual instance that belongs to only one user may be deployed on one host, or virtual instances that belong to a plurality of users may be deployed on one host. The host on which the virtual instance that belongs to only one user is deployed may be referred to as a dedicated host. Currently, some cloud vendors have launched a dedicated host service mode, and a service of the dedicated host may be referred to as a dedicated host service. In the service mode, the user can purchase (also referred to as rent) a host instead of a virtual instance. The virtual instance deployed on the dedicated host does not share physical resources with a virtual instance of another user, and therefore can exclusively use the physical resources of the dedicated host. Therefore, the dedicated host is characterized by high resource isolation. The user has absolute management and control rights over the dedicated host. For example, for a dedicated host cluster of the user, a management and control capability may be represented as follows: The user may control a manner of deploying the virtual instance in the dedicated host cluster (for example, may specify a dedicated host on which the virtual instance is to be deployed in the dedicated host cluster), and may also freely manage resource distribution in the dedicated host cluster. Therefore, the dedicated host is further characterized by more flexible deployment. Hosts in this application are mainly dedicated hosts.

The virtual instance runs on an operating system of the host, an operating system is disposed on the virtual instance, an application is run on the operating system of the virtual instance, and the application is used to implement a service of the user. The virtual instance may use a hardware resource of the host, and different virtual instances are isolated from each other. Generally, the virtual instance may be a virtual machine or a container.

The virtual machine (virtual machine, VM) is a complete computer system that is obtained through simulation according to the virtualization technology, has complete hardware system functions, and runs in a completely isolated environment. Some instruction subsets of the virtual machine may be processed in a host (host) machine, and some other instructions may be executed in a simulation manner. The virtual machine is also referred to as a virtual server.

The virtual machine may be considered as a set of several virtual devices, and the set of several devices is a complete computer system that has complete hardware system functions and that runs in a completely isolated environment. According to the virtualization technology, the virtual device is obtained through virtualization based on a physical device whose resources can be shared. For example, according to the virtualization technology, a virtual processor obtained through virtualization based on a processor is a virtual device. For another example, according to the virtualization technology, a training card obtained through virtualization based on a field programmable logic gate array (field programmable logic gate array, FPGA) is also a virtual device.

The container provides a lightweight virtual running environment. The container may package all code, libraries, and dependencies of an application of the user into an image. When the image is executed, the image runs in the virtual running environment. The image does not share resources such as a memory, a processor (for example, a central processing unit (central processing unit, CPU)), and a disk of the host machine with another image. This implements container isolation between the image and the host and between the image and another image, and ensures that a process in the container cannot monitor any process or resource outside the container.

A resource fragment is a physical resource that is left in the host but is not sufficient to deploy a virtual instance.

A resource pool is a set of various hardware resources and software resources in a cloud computing data center. Generally, the resources in the resource pool may be classified into computing resources, storage resources, and network resources based on resource types.

Quality of service (quality of service, QoS) is a determining condition for measuring whether a service meets a requirement. In a scenario described in this application, the quality of service mainly indicates whether frequency and a probability of a hotspot occurring during deployment of a virtual instance on the host meet a requirement agreed with the user.

The dedicated host service is characterized by high resource isolation, flexible deployment, and allowance for a user-provided operating system license (license). Therefore, more and more users try to use the dedicated host service as a first choice when using a cloud service. When using the dedicated host service, the user focuses on service usage costs and the quality of service. In the dedicated host service, the costs are closely related to a quantity of used hosts, and the quality of service is related to a quantity of provisionable virtual instances of different specifications (especially large-specification virtual instances) in the dedicated host cluster of the user. However, as a scale of a user cluster increases, a quantity of hosts in the dedicated host cluster of the user increases. Consequently, it is more difficult for the user to manage the dedicated host cluster of the user, and it also takes more time and effort to control the service usage costs and the quality of service.

Currently, when cloud service vendors sell the dedicated host service, the user needs to specify a quantity of hosts to be purchased when purchasing the dedicated host service. In addition, the user creates a virtual instance needed by the user on the specified host when using the dedicated host service.

However, currently, resource utilization of the dedicated host service needs to be improved.

Embodiments of this application provide a host management method. The method includes: receiving a resource defragmentation instruction sent by a user, where the resource defragmentation instruction instructs to perform a resource defragmentation operation on a host cluster purchased by the user; and performing the resource defragmentation operation on the host cluster based on the resource defragmentation instruction. The host cluster includes a plurality of hosts. In the host management method, the resource defragmentation operation is performed on the host cluster, so that a resource usage status of the host cluster can be improved, and resource utilization of the host cluster is improved.

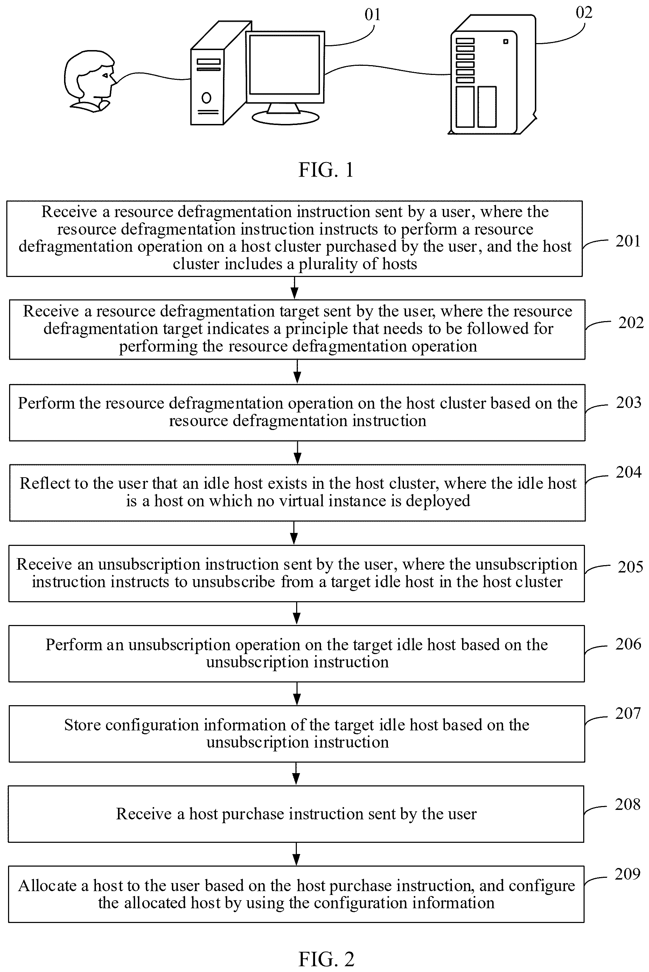

FIG. 1 is a diagram of a structure of an implementation environment related to a host management method according to an embodiment of this application. As shown in FIG. 1, the implementation environment includes a client 01 and a host management device 02. The client 01 can establish a communication connection to the host management device 02. For example, the communication connection may be established between the client 01 and the host management device 02 through a network. Optionally, the network may be a local area network, the internet, or another network. This is not limited in this embodiment of this application.

A user may interact with the host management device 02 through the client 01. In an implementation, the client 01 is configured to: send an instruction to the host management device 02 based on an indication of the user, for example, send a resource defragmentation instruction, an unsubscription instruction, and a purchase instruction. The resource defragmentation instruction instructs the host management device to perform a resource defragmentation operation on a host cluster. The unsubscription instruction instructs to unsubscribe from a host in the host cluster. The purchase instruction instructs to purchase a host.

In a possible implementation, the client 01 may be a desktop computer, a laptop computer, a mobile phone, a smartphone, a tablet computer, a multimedia player, a smart home appliance, an artificial intelligence device, a smart wearable device, an e-reader, a smart vehicle-mounted device, an internet of things device, or the like.

The host management device 02 is configured to: receive the instruction sent by the client 01, and perform, according to the host management method provided in this embodiment of this application, an operation indicated by the instruction. For example, the host management device 02 is configured to: receive the resource defragmentation instruction, and perform the resource defragmentation operation on the host cluster based on the resource defragmentation instruction according to the host management method provided in this embodiment of this application. For example, the host management device 02 is configured to: receive the unsubscription instruction, andperform, based on the unsubscription instruction according to the host management method provided in this embodiment of this application, an unsubscription operation on a target idle host indicated by the unsubscription instruction (for example, allocate the target idle host into a public resource pool, and stop charging the target idle host).

In a possible implementation, the host management device 02 may be implemented by using a computer device. In addition, the computer device may be a server (for example, a cloud server). Optionally, the server may be one server, a server cluster including several servers, or a cloud computing service center. A large quantity of basic resources of a cloud service provider are deployed in the cloud computing service center. For example, computing resources, storage resources, and network resources are deployed in the cloud computing service center. The cloud computing service center may implement the host management method provided in this embodiment of this application by using the large quantity of basic resources.

When the host management device 02 is implemented by using the cloud computing service center, the user may access a cloud platform through the client 01, and use a dedicated host service on the cloud platform. In this case, a function implemented by the host management method provided in this embodiment of this application may be abstracted by the cloud service provider into a host management cloud service on the cloud platform, and the cloud platform can provide the host management cloud service for the user by using the resource in the cloud computing service center. After the user purchases the host management cloud service on the cloud platform, the host management cloud service can be used to manage a host cluster purchased by the user. Optionally, the cloud platform may be a cloud platform of a central cloud, a cloud platform of an edge cloud, or a cloud platform including a central cloud and an edge cloud. This is not specifically limited in this embodiment of this application.

It should be noted that, in the implementation environment shown in FIG. 1, the host management device 02 may alternatively be implemented by using a resource platform other than the cloud platform. This is not specifically limited in this embodiment of this application. In this case, the host management device 02 may be implemented by using a resource on the another resource platform, and provide a related host management service for the user.

It should be understood that the foregoing content is an example for describing an application scenario of the host management method provided in embodiments of this application, and does not constitute a limitation on the application scenario of the host management method. A person of ordinary skill in the art may learn that, as a service requirement changes, the application scenario of the host management method may be adjusted based on an application requirement, and is not listed one by one in embodiments of this application.

The following describes a host management method provided in an embodiment of this application. As shown in FIG. 2, the host management method includes the following steps.

Step 201: Receive a resource defragmentation instruction sent by a user, where the resource defragmentation instruction instructs to perform a resource defragmentation operation on a host cluster purchased by the user, and the host cluster includes a plurality of hosts.

In this embodiment of this application, a host cluster purchased by a user is used to deploy a virtual instance of the user. Because a host cluster purchased by a user cannot be used to deploy a virtual instance of another user, the host cluster may be referred to as a dedicated host cluster of the user, and a host in the dedicated host cluster is referred to as a dedicated host of the user. The virtual instance of the user is used to implement a service of the user. Optionally, the virtual instance may be a virtual machine, a container, or the like.

To ensure user experience, a host management device usually needs to obtain agreement of the user before performing the resource defragmentation operation on the host cluster. An agreement intention of the user may be conveyed to the host management device by using an instruction sent by the user. In a possible implementation, the agreement intention of the user may be conveyed to the host management device by using the resource defragmentation instruction. In other words, the resource defragmentation instruction instructs to perform the resource defragmentation operation on the host cluster purchased by the user.

In different application scenarios, implementations in which the user triggers the resource defragmentation instruction may be different based on application requirements in different scenarios. In this embodiment of this application, the following three implementations are used as examples to describe an implementation process of the host management method provided in this embodiment of this application.

In a first implementation in which the user triggers the resource defragmentation instruction, when determining that the resource defragmentation operation needs to be performed on the host cluster, the host management device may send a resource defragmentation request to the user, and when determining that the resource defragmentation operation needs to be performed on the host cluster, the user may trigger the resource defragmentation instruction based on the resource defragmentation request. In an implementation, the implementation process of the host management method provided in this embodiment of this application further includes: monitoring a resource usage status of the host cluster; and when the resource usage status meets a specified condition, sending, to the user, the resource defragmentation request for requesting to perform the resource defragmentation operation on the host cluster. Correspondingly, an implementation process of step 201 includes: receiving the resource defragmentation instruction triggered by the user based on the resource defragmentation request.

In different application scenarios, there may be a plurality of implementations of the specified condition. In some possible implementations, the specified condition may include one or more of the following: The resource usage status indicates that resource utilization of the host cluster is less than a utilization threshold; a quantity of provisionable virtual instances in the host cluster is expected to be increased through resource defragmentation; and an idle host is expected to be obtained through resource defragmentation, and costs saved by unsubscribing from the idle host meet a specified requirement. The idle host is a host on which no virtual instance is deployed. The utilization threshold may be determined based on an application requirement, for example, may be 60%.

When the specified condition includes that the resource usage status indicates that the resource utilization of the host cluster is less than the utilization threshold, if the specified condition is met, the resource defragmentation request is sent to the user, so that when the resource utilization of the host cluster is low, the user can be queried whether to perform the resource defragmentation operation on the host cluster. This helps improve the resource utilization of the host cluster and reduce costs of using the host cluster by the user.

When the specified condition includes that the quantity of provisionable virtual instances in the host cluster is expected to be increased through resource defragmentation, if the specified condition is met, the resource defragmentation request is sent to the user, so that the quantity of provisionable virtual instances in the host cluster can be increased. This helps provision more virtual instances under same usage costs of the host cluster, and improves quality of service and the resource utilization of the host cluster.

When the specified condition includes that the idle host is expected to be obtained through resource defragmentation, and the costs saved by unsubscribing from the idle host meet the specified requirement, if the specified condition is met, the resource defragmentation request is sent to the user, so that a host can be vacated in the host cluster, and costs may be reduced by unsubscribing from the idle host. This helps reduce the costs of using the host cluster by the user. That the costs saved by unsubscribing from the idle host meet the specified requirement may mean that the costs saved by unsubscribing from the idle host can compensate for impact of migrating a virtual instance originally deployed on the idle host to a public resource pool. Resources in the public resource pool can be used by a plurality of users, while resources in the host cluster are used only by a user who purchases the host cluster. In comparison with the public resource pool, the host cluster has advantages such as better isolation. Migrating the virtual instance originally deployed on the host to the public resource pool may cause quality of service deterioration. Therefore, the specified requirement met by the costs saved by unsubscribing from the idle host can be that the saved costs can compensate for the quality of service deterioration caused by migrating the virtual instance to the public resource pool.

There may be a plurality of manners of calculating the resource utilization and a plurality of manners of measuring that the resource utilization is less than the utilization threshold. For example, the resource utilization may be average resource utilization of the host cluster in specified duration, or may be peak resource utilization of the host cluster in specified duration. For another example, that the resource utilization is less than the utilization threshold may be: The resource utilization is continuously less than the utilization threshold in specified duration, or the resource utilization is less than the utilization threshold in most time units in the specified duration.

Both the quantity of provisionable virtual instances in the host cluster that is expected to be increased through resource defragmentation and the idle host expected to be obtained through resource defragmentation may be obtained by performing resource defragmentation derivation on the host cluster by the host management device. The costs saved by unsubscribing from the idle host may be determined based on costs saved by unsubscribing from idle hosts of a specified quantity. The idle hosts of the specified quantity may be all idle hosts that are expected to be obtained through defragmentation, or may be a part of idle hosts that are expected to be obtained through defragmentation. In addition, the costs saved by unsubscribing from the idle host may be determined based on rental costs of the host and costs generated by vacating the host. The costs generated by vacating the host may be determined based on an application scenario. For example, when the host is vacated, if the virtual instance deployed on the host needs to be migrated to the public resource pool, the costs generated by vacating the host include: costs needed for migrating the virtual instance and costs needed for deploying the migrated virtual instance in the public resource pool. In an implementation, when the virtual instance is deployed on a dedicated host, licensing costs and other related costs do not need to be additionally paid. When the virtual instance is deployed in the public resource pool, licensing costs and other related costs need to be additionally paid. Therefore, the costs needed for deploying the virtual instance in the public resource pool include the licensing costs and other related costs. For example, the costs saved by unsubscribing from the idle host may be equal to costs obtained by subtracting, from rental costs saved by unsubscribing from the host, costs needed for migrating all virtual instances deployed on the host, and licensing costs and other related costs needed for deploying all the virtual instances deployed on the host in the public resource pool. Costs of using the dedicated host are higher than that of using a host in the public resource pool.

Optionally, the resource defragmentation request may further carry a defragmentation benefit obtained by performing the resource defragmentation operation. In this way, when viewing the resource defragmentation request, the user may view the defragmentation benefit that can be obtained by performing the resource defragmentation operation, so that the user determines, with reference to the defragmentation benefit, whether the resource defragmentation operation needs to be performed on the host cluster. The defragmentation benefit may be obtained by performing resource defragmentation derivation on the host cluster by the host management device.

In an implementation, the defragmentation benefit includes one or more of the following: an improvement degree of the resource utilization, a quantity of idle hosts that can be obtained through defragmentation, costs that can be saved by unsubscribing from the idle host obtained through defragmentation, and a quantity of provisionable virtual instances that can be increased by and costs saved due to the increase in a quantity of provisionable virtual instances. The costs saved due to the increase in the quantity of provisionable virtual instances are costs that need to be consumed for deployment of virtual instances of a same quantity when the resource defragmentation operation is not performed on the host cluster. For example, because an additional host needs to be purchased to deploy the virtual instances of the same quantity, the costs may be costs needed for purchasing the additional host.

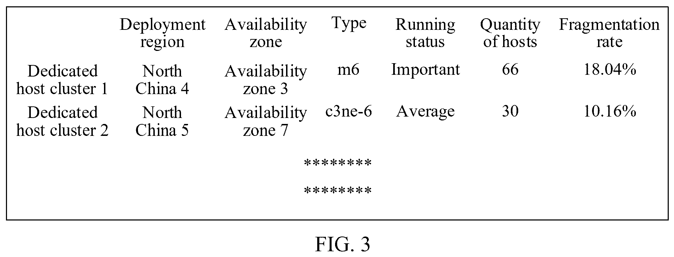

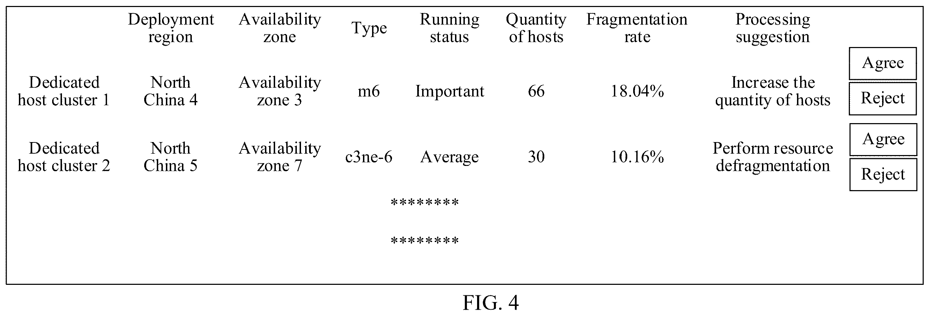

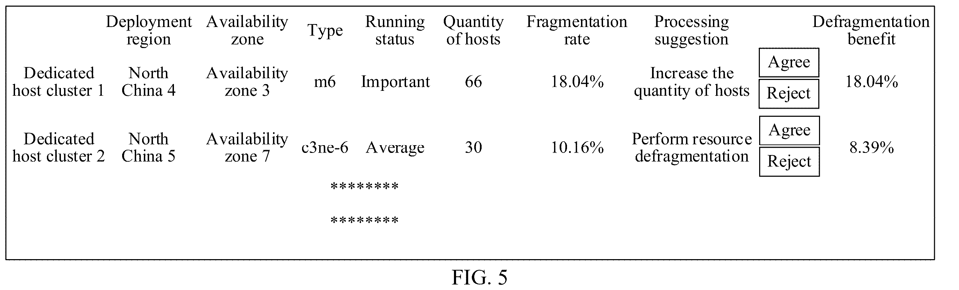

For example, the host management device may provide related information about the host cluster for the user, and the user may view the related information about the host cluster on a client used by the user. FIG. 3 is a diagram of a host cluster management interface displayed on a client according to an embodiment of this application. As shown in FIG. 3, the related information about the host cluster includes information such as a deployment region, an availability zone, a type, a running status, a quantity of included hosts, and a resource usage status (represented by a fragmentation rate in FIG. 3, where the fragmentation rate is inversely related to the resource utilization) of a data center to which the host cluster belongs. In an implementation, the resource defragmentation request may be presented on the management interface. FIG. 4 is a diagram of presenting a resource management request on a management interface according to an embodiment of this application. As shown in FIG. 4, in comparison with the management interface shown in FIG. 3, a column of "processing suggestion" is added to the management interface shown in FIG. 4. For different host clusters, a processing suggestion may be: "increase a quantity of hosts", "perform resource defragmentation", or the like. "Agree" and "Reject" selection buttons are further set behind the processing suggestion for the user to indicate whether to manage the host cluster based on the processing suggestion. For example, when the processing suggestion is "perform resource defragmentation", if the user selects "Agree", the resource defragmentation instruction may be triggered. For another example, as shown in FIG. 5, in comparison with the management interface shown in FIG. 4, a column of "defragmentation benefit" is added to a management interface shown in FIG. 5. The column is used to present the defragmentation benefit obtained by performing the resource defragmentation operation. A defragmentation benefit in FIG. 5 is a fragmentation rate of the host cluster after resource defragmentation. It should be noted that FIG. 3 to FIG. 5 are merely examples of the management interface, and are not used to limit an implementation of the management interface. In addition, other content that needs to be presented to the user may be presented on the management interface based on an application requirement, for example, a running load of the host cluster, a current quantity of provisionable virtual instances, and a current quantity of idle hosts. Correspondingly, the defragmentation benefit may be a quantity of provisionable virtual instances and a quantity of idle hosts that are expected after resource defragmentation.

In a second implementation in which the user triggers the resource defragmentation instruction, the host management device may reflect a resource usage status of the host cluster to the user, and when determining, based on the resource usage status, that the resource defragmentation operation needs to be performed, the user triggers the resource defragmentation instruction. In an implementation, the implementation process of the host management method provided in this embodiment of this application further includes: monitoring the resource usage status of the host cluster, and reflecting the resource usage status of the host cluster to the user. Correspondingly, an implementation process of step 201 includes: receiving the resource defragmentation instruction triggered by the user based on the resource usage status. For example, a "resource defragmentation" button may be further presented on a management interface. When determining, based on a resource usage status presented on the management interface, that resource utilization of the host cluster is low or a virtual machine (especially a large-specification virtual machine) provisioning capability of the host cluster is poor, the user may click the button, to trigger the resource defragmentation instruction. In this way, the resource defragmentation operation is performed on the host cluster in this case. This can help the user improve the resource utilization of the host cluster, optimize a manner of deploying the virtual instance in the host cluster, reduce usage costs of the host cluster, and improve quality of service of the host cluster.

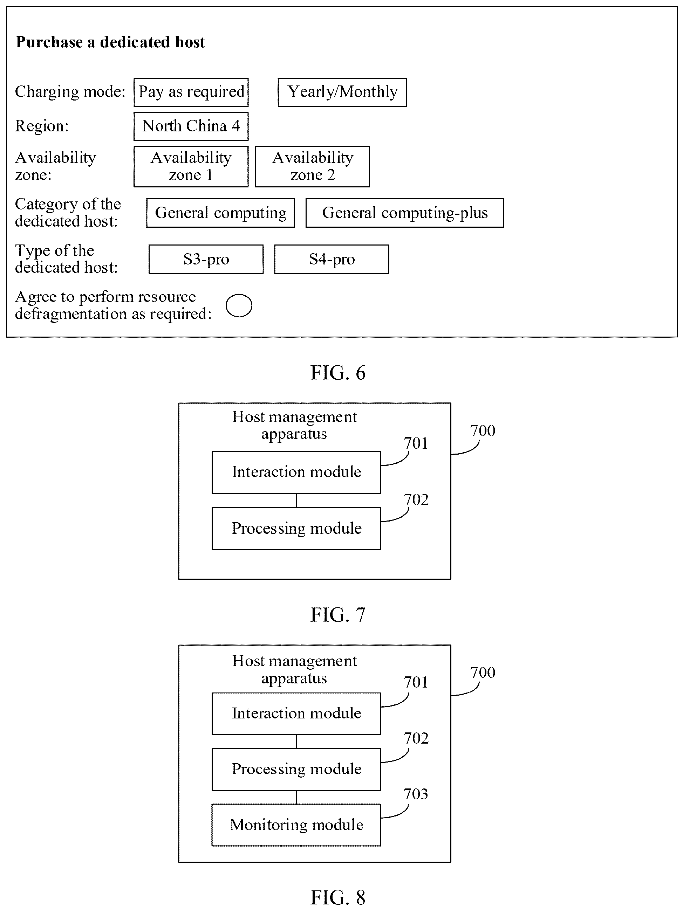

In a third implementation in which the user triggers the resource defragmentation instruction, the resource defragmentation instruction may be triggered by a selection operation of the resource defragmentation operation when the user purchases the host cluster. In an implementation, a host purchasing platform provides an option of choosing, when the host cluster is purchased, whether to perform resource defragmentation on the host cluster. When purchasing the host cluster, the user may choose to perform the resource defragmentation operation on the host cluster, or may not choose to perform the resource defragmentation operation on the host cluster. If the user chooses to perform the resource defragmentation operation on the host cluster, the host management device may perform the resource defragmentation operation on the host cluster when the host cluster meets a defragmentation condition. The host management device and the user may pre-agree on the defragmentation condition, or the host management device may provide a standby option of the defragmentation condition, and a standby option selected by the user is the defragmentation condition. For example, FIG. 6 is a diagram of a host cluster purchase interface displayed on a client according to an embodiment of this application. As shown in FIG. 6, in addition to information such as a charging mode, a category, and a type of the dedicated host, an option of resource defragmentation is further set on the purchase interface. When the user selects the resource defragmentation, the resource defragmentation instruction may be triggered. In this case, when the host cluster meets the defragmentation condition, the host management device performs the resource defragmentation operation on the host cluster.

It should be noted that, based on a service requirement, the resource defragmentation instruction may instruct to perform the resource defragmentation operation on a part of or all hosts in the host cluster. When the resource defragmentation instruction performs the resource defragmentation operation on a part of hosts in the host cluster, the resource defragmentation instruction may further indicate indication information of a host on which the resource defragmentation operation needs to be performed.

Step 202: Receive a resource defragmentation target sent by the user, where the resource defragmentation target indicates a principle that needs to be followed for performing the resource defragmentation operation.

The user may specify an optimization target when the resource defragmentation operation is performed on the host cluster. When performing the resource defragmentation operation on the host cluster, the host management device may defragment the resource in the host cluster by using the optimization target as a goal, to implement defragmentation of the resource in the host cluster as required. The optimization target is the resource defragmentation target. In different implementation scenarios, the resource defragmentation target may be different. In an implementation, the resource defragmentation target includes one or two of the following: maximizing a quantity of idle hosts in the host cluster, and maximizing the quantity of provisionable virtual instances in the host cluster. When the resource defragmentation target includes maximizing the quantity of idle hosts in the host cluster, as many hosts as possible can be vacated through resource defragmentation, so that the user can unsubscribe from the idle host as required, to reduce usage costs of the host and avoid a waste of resources. When the resource defragmentation target includes maximizing the quantity of provisionable virtual instances in the host cluster, the manner of deploying the virtual instance in the host cluster can be optimized through resource defragmentation, so that an optimized host cluster can provision as many virtual instances as possible, to improve the virtual instance provisioning capability of the host cluster. In this way, usage costs of the host can be reduced, and in addition, the quality of service can be improved.

Optionally, the resource defragmentation target may be carried in the resource defragmentation instruction, or may not be carried in the resource defragmentation instruction. For example, in some implementation scenarios, the resource defragmentation instruction not only instructs to perform the resource defragmentation operation on the host cluster purchased by the user, but also indicates the resource defragmentation target when the resource defragmentation operation is performed on the host cluster. For another example, in another implementation scenario, the resource defragmentation target may be sent by using another instruction. After receiving the resource defragmentation instruction, the host management device may determine that the resource defragmentation operation needs to be performed on the host cluster. After receiving the instruction carrying the resource defragmentation target, the host management device can determine the principle that needs to be followed for performing the resource defragmentation operation on the host cluster.

It should be noted that, step 202 is an optional step, and whether this step needs to be performed may be determined based on an application requirement. For example, in some scenarios, the host management device may be configured with a default resource defragmentation target. After receiving the resource defragmentation instruction, the host management device may perform the resource defragmentation operation on the host cluster based on the default resource defragmentation target. In this case, step 202 does not need to be performed. For another example, in some scenarios, the user may customize a resource defragmentation target, and step 202 needs to be performed. For another example, in some other scenarios, the host management device is configured with a default resource defragmentation target, and the user may also customize a resource defragmentation target. Step 202 is not performed when the user does not specify the resource defragmentation target. In this case, the host management device performs the resource management operation based on the default resource defragmentation target. Step 202 is performed when the user specifies the resource defragmentation target. In this case, the host management device performs the resource management operation based on the resource defragmentation target specified by the user.

Step 203: Perform the resource defragmentation operation on the host cluster based on the resource defragmentation instruction.

After receiving the resource defragmentation instruction, the host management device may perform the resource defragmentation operation on the host cluster. In addition, when step 202 is performed, the host management device needs to perform the resource defragmentation operation on the host cluster based on the resource defragmentation target. In this case, an implementation of step 203 includes: performing the resource defragmentation operation on the host cluster based on the resource defragmentation instruction and the resource defragmentation target.

In an implementation, the resource defragmentation operation includes one or two of the following: adjusting a deployment status of the virtual instance in the host cluster, and migrating a part of virtual instances deployed in the host cluster to the public resource pool. Adjusting the deployment status of the virtual instance in the host cluster means migrating virtual instances deployed on some hosts in the host cluster to other hosts in the host cluster. Optionally, there may be a plurality of implementations of migrating the virtual instance. For example, the virtual instance may be migrated in a cold migration manner or a live migration manner. This is not specifically limited in this embodiment of this application. The resource defragmentation operation may be considered as defragmenting a fragment resource of the host in the host cluster, and the resource defragmentation process is also referred to as a fragment resource defragmentation process.

Step 204: Reflect to the user that an idle host exists in the host cluster, where the idle host is a host on which no virtual instance is deployed.

After resource defragmentation, an idle host may exist in the host cluster. The host management device may reflect to the user that an idle host exists in the host cluster, so that the user determines whether the idle host needs to be unsubscribed from. There may be a plurality of manners in which the host management device reflects to the user that an idle host exists in the host cluster. For example, the host management device may only notify the user that an idle host exists in the host cluster, or the host management device may query the user whether to unsubscribe from an idle host, so that the user learns that an idle host exists in the host cluster. In addition, there may also be a plurality of presentation forms in which the host management device reflects to the user that an idle host exists in the host cluster. For example, when reflecting an idle host to the user, the host management device may only notify the user of a quantity of idle hosts. In this case, the user may choose to unsubscribe from idle hosts of a specified quantity. Alternatively, the host management device may notify the user of information (for example, identification information) about an idle host. In this case, the user may choose to unsubscribe from the idle host having the specified information. It should be noted that the foregoing reflection manner and presentation form in which the host management device reflects to the user that an idle host exists in the host cluster are both examples, and are not used to limit the reflection manner and the presentation form. A person of ordinary skill in the art may learn that, as a service requirement changes, both the reflection manner and the presentation form may be adjusted based on an application requirement, and are not listed one by one in embodiments of this application.

Step 205: Receive an unsubscription instruction sent by the user, where the unsubscription instruction instructs to unsubscribe from a target idle host in the host cluster.

When the user learns that an idle host exists in the host cluster, the user may determine whether to unsubscribe from the idle host. When the user needs to unsubscribe from the idle host, the user may trigger the unsubscription instruction by performing an operation, to instruct the host management device to perform an unsubscription operation. In an implementation, the unsubscription instruction may carry a quantity of idle hosts that need to be unsubscribed from, to instruct the host management device to perform the unsubscription operation on the idle hosts of the quantity. Alternatively, the unsubscription instruction may carry information such as identification information of an idle host that needs to be unsubscribed from, to instruct the host management device to perform the unsubscription operation on the idle host indicated by the information. In addition, target idle hosts may be a part of or all idle hosts in the host cluster.

Step 206: Perform the unsubscription operation on the target idle host based on the unsubscription instruction.

After receiving the unsubscription instruction, the host management device may perform, based on the unsubscription instruction, the unsubscription operation on the target idle host indicated by the unsubscription instruction. The unsubscription operation may include operations such as deleting a related record of allocating the target idle host to the user, and stopping charging the host. The related record of allocating the target idle host to the user is deleted, so that a status of the target idle host can be changed to a to-be-allocated state, and the host management device can reallocate the target idle host. The resource defragmentation operation is performed on the host cluster to obtain the idle host through defragmentation, and the idle host is unsubscribed from based on a user instruction, so that a redundant host in the host cluster can be deleted in time, costs of using the host by the user can be reduced, and a waste of resources can be avoided.

Step 207: Store configuration information of the target idle host based on the unsubscription instruction.

After receiving the unsubscription instruction, the host management device may determine the idle host that needs to be unsubscribed from. After determining the idle host that needs to be unsubscribed from, the host management device may obtain configuration information of the idle host that needs to be unsubscribed from, and store the configuration information for subsequent use. Configuration information of the host includes information indicating an external facility, for example, a host type, a hard disk drive, and a network.

Optionally, the host management device may need to store the configuration information of the target idle host by default. In other words, after receiving the unsubscription instruction, the host management device may store the configuration information of the target idle host based on the unsubscription instruction. Alternatively, the user may choose whether to store the configuration information of the target idle host. The host management device may store the configuration information of the target idle host when the user indicates to store the configuration information of the target idle host, or may not store the configuration information of the target idle host when the user does not indicate to store the configuration information of the target idle host. This is not specifically limited in this embodiment of this application. The user may indicate, in the unsubscription instruction, whether to store the configuration information of the target idle host, or the user may send a storage instruction to the host management device through the client, to indicate hosts whose configuration information needs to be stored.

It should be noted that step 207 is an optional step, and whether this step needs to be performed may be determined based on an application requirement.

Step 208: Receive a host purchase instruction sent by the user.

After unsubscribing from the target idle host, the user may further continue to purchase a host based on a service requirement, and send the host purchase instruction to the host management device through the client when the user needs to purchase the host, to convey a purchase intention of the user to the host management device.

Step 209: Allocate a host to the user based on the host purchase instruction, and configure the allocated host by using the configuration information.

After receiving the host purchase instruction, the host management device may allocate a host to the user, and configure the allocated host. When the host management device stores the configuration information of the target idle host, the host management device may obtain the configuration information, and configure the allocated host by using the configuration information. When the host management device does not store the configuration information of the target idle host, the host management device needs to configure the allocated host based on an indication of the user. The configuration information of the target idle host is stored, so that when the user purchases a host again, the host allocated to the user may be directly configured by using the stored configuration information, and the user does not need to indicate a configuration manner of the host again. This can effectively improve host management efficiency of the host management device, and improve user experience.

In conclusion, in the host management method provided in this embodiment of this application, the host management device may receive the resource defragmentation instruction sent by the user, and perform the resource defragmentation operation on the host cluster based on the resource defragmentation instruction. The resource defragmentation instruction instructs to perform the resource defragmentation operation on the host cluster purchased by the user, and the host cluster includes a plurality of hosts. In this way, in the host management method, the resource defragmentation operation is performed on the host cluster, so that the resource usage status of the host cluster can be improved, and the resource utilization of the host cluster is improved. In addition, the host management device performs resource defragmentation on the host cluster, so that the user does not need to manually migrate the virtual instance deployed on the host, and the user does not need to identify the host that needs to be unsubscribed from. This implements automatic management on the host cluster of the user. Moreover, when the user unsubscribes from the target idle host, the configuration information of the target idle host is stored, so that when the user purchases a host again, the host configured for the user can be configured by using the stored configuration information, and the user does not need to indicate the configuration manner of the host again. This can effectively improve the host management efficiency of the host management device, and improve user experience.

It should be noted that a sequence of steps of the host management method provided in this embodiment of this application may be properly adjusted, and a step may be correspondingly added or removed based on a situation. Any method variation readily figured out by a person skilled in the art within the technical scope disclosed in this application shall fall within the protection scope of this application. Therefore, details are not described.

The foregoing describes the host management method in the embodiment of this application. In correspondence to the foregoing method, an embodiment of this application further provides a host management apparatus. FIG. 7 is a diagram of a structure of a host management apparatus according to an embodiment of this application. Based on the following plurality of modules shown in FIG. 7, the host management apparatus shown in FIG. 7 can perform all or some of the operations shown in the foregoing embodiment. It should be understood that the apparatus may include more additional modules than the shown modules or a part of the shown modules may be omitted. This is not limited in this embodiment of this application. As shown in FIG. 7, the host management apparatus 700 includes:
an interaction module 701, configured to receive a resource defragmentation instruction sent by a user, where the resource defragmentation instruction instructs to perform a resource defragmentation operation on a host cluster purchased by the user, and the host cluster includes a plurality of hosts; and
a processing module 702, configured to perform the resource defragmentation operation on the host cluster based on the resource defragmentation instruction.

Optionally, as shown in FIG. 8, the host management apparatus 700 further includes a monitoring module 703, configured to monitor a resource usage status of the host cluster.

Correspondingly, the interaction module 701 is further configured to: when the resource usage status meets a specified condition, send, to the user, a resource defragmentation request for requesting to perform the resource defragmentation operation on the host cluster.

The interaction module 701 is specifically configured to receive the resource defragmentation instruction triggered by the user based on the resource defragmentation request.

Optionally, the specified condition includes one or more of the following: The resource usage status indicates that resource utilization of the host cluster is less than a utilization threshold; a quantity of provisionable virtual instances in the host cluster can be increased through resource defragmentation; and an idle host can be obtained through resource defragmentation, and costs saved by unsubscribing from the idle host meet a specified requirement, where the idle host is a host on which no virtual instance is deployed.

Optionally, the resource defragmentation request further carries a defragmentation benefit obtained by performing the resource defragmentation operation.

Optionally, the defragmentation benefit includes one or more of the following: an improvement degree of the resource utilization, a quantity of idle hosts that can be obtained through defragmentation, costs that can be saved by unsubscribing from the idle host obtained through defragmentation, and a quantity of provisionable virtual instances that can be increased by and costs saved due to the increase in a quantity of provisionable virtual instances, where the idle host is a host on which no virtual instance is deployed.

Optionally, the interaction module 701 is further configured to reflect a resource usage status of the host cluster to the user.

The interaction module 701 is specifically configured to receive the resource defragmentation instruction triggered by the user based on the resource usage status.

Optionally, the resource defragmentation instruction is triggered by a selection operation of the resource defragmentation operation when the user purchases the host cluster.

Optionally, the interaction module 701 is further configured to receive a resource defragmentation target sent by the user, where the resource defragmentation target indicates a principle that needs to be followed for performing the resource defragmentation operation.

The processing module 702 is specifically configured to perform the resource defragmentation operation on the host cluster based on the resource defragmentation target.

Optionally, the resource defragmentation target includes one or two of the following: maximizing a quantity of idle hosts in the host cluster, and maximizing the quantity of provisionable virtual instances in the host cluster, where the idle host is a host on which no virtual instance is deployed.

Optionally, the resource defragmentation operation includes one or two of the following: adjusting a deployment status of the virtual instance in the host cluster, and migrating a part of virtual instances deployed in the host cluster to a public resource pool.

Optionally, the interaction module 701 is further configured to reflect to the user that an idle host exists in the host cluster, where the idle host is a host on which no virtual instance is deployed.

The interaction module 701 is further configured to receive an unsubscription instruction sent by the user, where the unsubscription instruction instructs to unsubscribe from a target idle host in the host cluster.

The processing module 702 is further configured to perform an unsubscription operation on the target idle host based on the unsubscription instruction.

Optionally, the processing module 702 is further configured to store configuration information of the target idle host based on the unsubscription instruction.

Optionally, the processing module 702 is further configured to: after a host purchase instruction of the user is received, allocate a host to the user, and configure the allocated host by using the configuration information.

The interaction module 701, the processing module 702, and the monitoring module 703 may all be implemented by using software, or may be implemented by using hardware. For example, the following uses the interaction module 701 as an example to describe an implementation of the interaction module 701. Similarly, for implementations of the processing module 702 and the monitoring module 703, refer to the implementation of the interaction module 701.

The module is used as an example of a software functional unit, and the interaction module 701 may include code run on a computing instance. The computing instance may include at least one of a physical host (computing device), a virtual machine, and a container. Further, there may be one or more computing instances. For example, the interaction module 701 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions, and interconnection between VPCs is implemented through the communication gateway.

The module is used as an example of a hardware functional unit, and the interaction module 701 may include at least one computing device, for example, a server. Alternatively, the interaction module 701 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

The plurality of computing devices included in the interaction module 701 may be distributed in a same region, or may be distributed in different regions. The plurality of computing devices included in the interaction module 701 may be distributed in a same AZ, or may be distributed in different AZs. Similarly, the plurality of computing devices included in the interaction module 701 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the interaction module 701 may be configured to perform any step in the host management method, the processing module 702 may be configured to perform any step in the host management method, and the monitoring module 703 may be configured to perform any step in the host management method. Steps that the interaction module 701, the processing module 702, and the monitoring module 703 are responsible for performing may be specified based on a requirement. The interaction module 701 and the processing module 702 separately implement different steps in the host management method, to implement all functions of a storage node, and the interaction module 701, the processing module 702, and the monitoring module 703 separately implement different steps in the host management method, to implement all functions of the host management apparatus.

It should be understood that, when the apparatus provided in FIG. 7 and FIG. 8 implements the functions of the apparatus, division into the foregoing functional modules is merely used as an example for description. In actual application, the foregoing functions may be allocated to different functional modules for implementation based on a requirement. In other words, an internal structure of a device is divided into different functional modules, to implement all or some of the functions described above. In addition, the apparatus provided in the foregoing embodiments and the method embodiments pertain to a same concept. For a specific implementation process of the apparatus, refer to the method embodiments. Details are not described herein again.

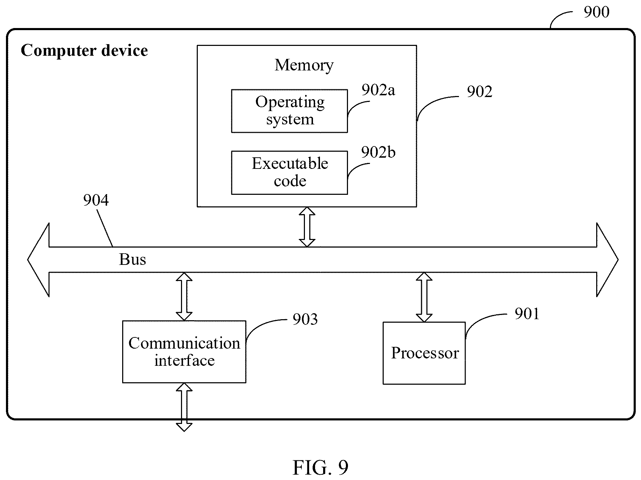

An embodiment of this application provides a computer device. The computer device is configured to implement some or all functions in the host management method provided in embodiments of this application. FIG. 9 is a diagram of a structure of a computer device according to an embodiment of this application. As shown in FIG. 9, the computer device 900 includes a processor 901, a memory 902, a communication interface 903, and a bus 904. The processor 901, the memory 902, and the communication interface 903 are communicatively connected to each other through the bus 904.

The processor 901 may include a general-purpose processor and/or a dedicated hardware chip. The general-purpose processor may include a central processing unit (central processing unit, CPU), a microprocessor, or a graphics processing unit (graphics processing unit, GPU). The CPU is, for example, a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field programmable logic gate array (field programmable gate array, FPGA), or a network processor (network processor, NP). The processor 901 may alternatively be an integrated circuit chip and has a signal processing capability. In an implementation process, some or all functions of the host management method in this application may be implemented by using an integrated logic circuit of hardware in the processor 901 or instructions in a form of software.

The memory 902 is configured to store a computer program. The computer program includes an operating system 902a and executable code (namely, program instructions) 902b. For example, the memory 902 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer. However, the memory 902 is not limited thereto. For example, the memory 902 is configured to store an egress queue and the like. For example, the memory 902 exists independently, and is connected to the processor 901 through the bus 904. Alternatively, the memory 902 and the processor 901 are integrated together. For example, the memory 902 may include a volatile memory (volatile memory), for example, a random access memory (random access memory, RAM). The processor 901 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 902 may store executable code. When the executable code stored in the memory 902 is executed by the processor 901, the processor 901 is configured to perform some or all functions of the host management method provided in embodiments of this application. For an implementation in which the processor 901 performs the process, refer to related descriptions in the foregoing embodiments. The memory 902 may further include a software module, data, and the like that are needed by another running process, for example, an operating system.

The communication interface 903 uses a transceiver module, for example, but not limited to a transceiver, to implement communication with another device or a communication network. For example, the communication interface 903 may be any one or any combination of the following components having a network access function: a network interface (for example, an Ethernet interface) and a wireless network adapter.

The bus 904 is any type of communication bus configured to implement interconnection between internal components (for example, the memory 902, the processor 901, and the communication interface 903) of the computer device. For example, the bus 904 may be a peripheral component interconnect (peripheral component interconnect, PCI) bus, or an extended industry standard architecture (extended industry standard architecture, EISA) bus. The bus may be classified into an address bus, a data bus, a control bus, and the like. For ease of representation, only one line is used in FIG. 9 for representation, but it does not indicate that there is only one bus or only one type of bus. The bus 904 may include a path for transmitting information between components (for example, the processor 901, the memory 902, and the communication interface 903) of the computing device 900. In this embodiment of this application, an example in which the foregoing components in the computer device are interconnected through the bus 904 is used for description. Optionally, the foregoing components in the computer device 900 may alternatively be communicatively connected to each other in a connection manner other than the bus 904. For example, the foregoing components in the computer device 900 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Specific implementations of the foregoing components are not limited in this embodiment of this application. Descriptions of procedures corresponding to the foregoing accompanying drawings have respective focuses. For a part that is not described in detail in a procedure, refer to related descriptions of another procedure.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of the at least one computing device included in the computing device cluster, refer to the computing device 900 shown in FIG. 9. A memory 902 in one or more computing devices 900 in the computing device cluster may store same instructions for performing the host management method.

In some possible implementations, the memory 902 in the one or more computing devices 900 in the computing device cluster may alternatively separately store some instructions for performing the host management method. In other words, a combination of one or more computing devices 900 may jointly execute the instructions for performing the host management method.

It should be noted that memories 902 in different computing devices 900 in the computing device cluster may store different instructions respectively for implementing some functions of the host management method. In other words, the instructions stored in the memories 902 in different computing devices 900 may implement functions of one or more modules in a storage node and a computing node.

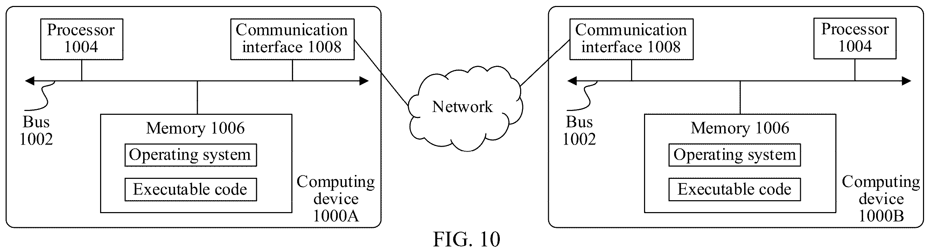

In some possible implementations, one or more computing devices in the computing device cluster may be connected through a network. The network may be a wide area network, a local area network, or the like. FIG. 10 shows a possible implementation. As shown in FIG. 10, two computing devices 1000A and 1000B are connected through a network. Specifically, each computing device is connected to the network through a communication interface of the computing device. In this possible implementation, the computing devices 1000A and 1000B include a bus 1002, a processor 1004, a memory 1006, and a communication interface 1008. The memory 1006 in the computing device 1000A stores instructions for implementing a function of a storage node. In addition, the memory 1006 in the computing device 1000B stores instructions for implementing a function of a computing node.

A connection manner between computing device clusters shown in FIG. 10 may be that, in consideration of a requirement that target data and indication information need to be transmitted in the host management method provided in this application, it is considered that the function implemented by the storage node is performed by the computing device 1000A, and the function implemented by the computing node is performed by the computing device 1000B.

It should be understood that a function of the computing device 1000A shown in FIG. 10 may alternatively be implemented by a plurality of computing devices 1000. Similarly, a function of the computing device 1000B may alternatively be implemented by the plurality of computing devices 1000.

An embodiment of this application further provides a computer-readable storage medium. The computer-readable storage medium is a non-volatile computer-readable storage medium. The computer-readable storage medium may be any usable medium that can be stored by a computing device, or a data storage device such as a data center that includes one or more usable media. The usable medium may be a magnetic medium (for example, a floppy disk, a hard disk drive, or a magnetic tape), an optical medium (for example, a DVD), a semiconductor medium (for example, a solid-state drive), or like. The computer-readable storage medium includes instructions, and the instructions instruct the computing device to perform the host management method provided in embodiments of this application.

An embodiment of this application further provides a computer program product including instructions. The computer program product may be software or a program product that includes instructions and that can run on a computing device or be stored in any usable medium. When the computer program product runs on at least one computing device, a computer is enabled to implement the host management method provided in embodiments of this application.

An embodiment of this application further provides a chip, including a processor, configured to invoke, from a memory, instructions stored in the memory and run the instructions, to enable a computing device on which the chip is installed to perform the host management method provided in embodiments of this application.

All or some of the foregoing embodiments may be implemented by using software, hardware, firmware, or any combination thereof. When software is used for implementation, all or some of embodiments may be implemented in a form of a computer program product. A computer program product that provides a program development platform includes one or more computer instructions. When these computer program instructions are loaded and executed on a computer device, all or some of functions of the host management method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide a program development platform.

A person of ordinary skill in the art may understand that all or some of steps of the foregoing embodiments may be implemented by using hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the configuration information and the like in this application are all obtained under full authorization.

In embodiments of this application, terms "first", "second", and "third" are merely used for a purpose of description, and shall not be understood as an indication or implication of relative importance. The term "at least one" means one or more, and the term "a plurality of" means two or more, unless otherwise expressly limited.

The term "and/or" in this application describes only an association relationship between associated objects and indicates that there may be three relationships. For example, A and/or B may indicate the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A host management method, wherein the method comprises:
receiving a resource defragmentation instruction sent by a user, wherein the resource defragmentation instruction instructs to perform a resource defragmentation operation on a host cluster purchased by the user, and the host cluster comprises a plurality of hosts;
performing the resource defragmentation operation on the host cluster based on the resource defragmentation instruction.

2. The method according to claim 1, wherein before the receiving a resource defragmentation instruction sent by a user, the method further comprises:
monitoring a resource usage status of the host cluster; and
when the resource usage status meets a specified condition, sending, to the user, a resource defragmentation request for requesting to perform the resource defragmentation operation on the host cluster; and
the receiving a resource defragmentation instruction sent by a user comprises:
receiving the resource defragmentation instruction triggered by the user based on the resource defragmentation request.

3. The method according to claim 2, wherein the specified condition comprises one or more of the following: the resource usage status indicates that resource utilization of the host cluster is less than a utilization threshold; a quantity of provisionable virtual instances in the host cluster can be increased through resource defragmentation; and an idle host can be obtained through resource defragmentation, and costs saved by unsubscribing from the idle host meet a specified requirement, wherein the idle host is a host on which no virtual instance is deployed.

4. The method according to claim 2, wherein the resource defragmentation request further carries a defragmentation benefit obtained by performing the resource defragmentation operation.

5. The method according to claim 4, wherein the defragmentation benefit comprises one or more of the following: an improvement degree of resource utilization, a quantity of idle hosts that can be obtained through defragmentation, costs that can be saved by unsubscribing from the idle host obtained through defragmentation, and a quantity of provisionable virtual instances that can be increased by and costs saved due to the increase in a quantity of provisionable virtual instances, wherein the idle host is a host on which no virtual instance is deployed.

6. The method according to claim 1, wherein before the receiving a resource defragmentation instruction sent by a user, the method further comprises:
reflecting a resource usage status of the host cluster to the user; and
the receiving a resource defragmentation instruction sent by a user comprises:
receiving the resource defragmentation instruction triggered by the user based on the resource usage status.

7. The method according to claim 1, wherein the resource defragmentation instruction is triggered by a selection operation of the resource defragmentation operation when the user purchases the host cluster.

8. The method according to any one of claims 1 to 7, wherein the method further comprises:
receiving a resource defragmentation target sent by the user, wherein the resource defragmentation target indicates a principle that needs to be followed for performing the resource defragmentation operation; and
the performing the resource defragmentation operation on the host cluster comprises:
performing the resource defragmentation operation on the host cluster based on the resource defragmentation target.

9. The method according to claim 8, wherein the resource defragmentation target comprises one or two of the following: maximizing a quantity of idle hosts in the host cluster, and maximizing the quantity of provisionable virtual instances in the host cluster, wherein the idle host is a host on which no virtual instance is deployed.

10. The method according to any one of claims 1 to 7, wherein the resource defragmentation operation comprises one or two of the following: adjusting a deployment status of the virtual instance in the host cluster, and migrating a part of virtual instances deployed in the host cluster to a public resource pool.

11. The method according to any one of claims 1 to 7, wherein after the performing the resource defragmentation operation on the host cluster, the method further comprises:
reflecting to the user that an idle host exists in the host cluster, wherein the idle host is a host on which no virtual instance is deployed;
receiving an unsubscription instruction sent by the user, wherein the unsubscription instruction instructs to unsubscribe from a target idle host in the host cluster; and
performing an unsubscription operation on the target idle host based on the unsubscription instruction.

12. The method according to claim 11, wherein the method further comprises:
storing configuration information of the target idle host based on the unsubscription instruction.

13. The method according to claim 12, wherein after the performing an unsubscription operation on the target idle host based on the unsubscription instruction, the method further comprises:
after a host purchase instruction of the user is received, allocating a host to the user, and configuring the allocated host by using the configuration information.

14. A host management apparatus, wherein the apparatus comprises:
an interaction module, configured to receive a resource defragmentation instruction sent by a user, wherein the resource defragmentation instruction instructs to perform a resource defragmentation operation on a host cluster purchased by the user, and the host cluster comprises a plurality of hosts; and
a processing module, configured to perform the resource defragmentation operation on the host cluster based on the resource defragmentation instruction.

15. A computer device, comprising a memory and a processor, wherein the memory stores program instructions, and the processor runs the program instructions to perform the method according to any one of claims 1 to 13.

16. A computer cluster, comprising a plurality of computer devices, wherein the plurality of computer devices comprise a plurality of processors and a plurality of memories, the plurality of memories store program instructions, and the plurality of processors run the program instructions, to enable the computer cluster to perform the method according to any one of claims 1 to 13.

17. A computer-readable storage medium, comprising program instructions, wherein when the program instructions are run on a computer device, the computer device is enabled to perform the method according to any one of claims 1 to 13.

18. A computer program product, wherein when the computer program product runs on a computer, the computer is enabled to perform the method according to any one of claims 1 to 13.
